# EUROPÄISCHE PATENTSCHRIFT

(11) **EP 0 630 976 B1**
(45) Veröffentlichungstag und Bekanntmachung des Hinweises auf die Patenterteilung: **31.03.1999**
(21) Anmeldenummer: 94107529.3
(22) Anmeldetag: 16.05.1994
(51) Int. Cl.: C21B 13/14, C21B 13/00

(54) **Verfahren zur Erzeugung von flüssigem Roheisen aus stückigem Eisenerz**
Process for producing molten pig iron from iron oxide pellets
Procédé pour produire de la fonte brute liquide à partir de particules de minerai de fer

(30) Priorität: 28.05.1993 DE 4317968
(43) Veröffentlichungstag der Anmeldung: 28.12.1994
(73) Patentinhaber: DEUTSCHE VOEST-ALPINE INDUSTRIEANLAGENBAU GMBH, 40219 Düsseldorf (DE); VOEST-ALPINE INDUSTRIEANLAGENBAU GESELLSCHAFT m.b.H., A-4020 Linz (AT)
(72) Erfinder: Vuletic, Bogdan, D-40213 Düsseldorf (DE)
(74) Vertreter: Pfenning, Meinig & Partner

(56) Entgegenhaltungen:
- DE-A- 2 935 544
- DE-A- 4 104 252
- DE-B- 2 810 313
- FR-A- 2 168 596
- GB-A- 2 185 970
- US-A- 3 998 606

## Beschreibung

Bei der industriellen Verarbeitung von Erdöl fallen große Mengen an Petrolkoks an, der wegen des hohen Schwefelgehaltes nur schwer anderweitig nutzbar und meist mit erheblichem Kostenaufwand absetzbar ist.

Gleichfalls nur mit erheblichen Kosten zu entsorgen sind Mischformen von Kunststoffprodukten, wie sie bei der Müllverarbeitung anfallen. Sie müssen entsprechend den gesetzlichen Bestimmungen einer stofflichen Verwertung zugeführt werden. Für die Verarbeitung dieser Abfallkunststoffe reichen jedoch die bestehenden Aufbereitungskapazitäten nicht aus, so daß der Überschuß, der in großen Mengen anfällt, zwischengelagert werden muß. Die Abfallkunststoffe werden nur noch gegen Bezahlung mit bisher stets gestiegenen Kosten entsorgt.

Aus der DE 30 34 539 ist ein Verfahren zur Roheisenherstellung nach dem Direktreduktionsverfahren bekannt, bei dem der kontinuierlich aus dem Direktreduktions-Schachtofen ausgetragene heiße Eisenschwamm von oben in den Einschmelzvergaser chargiert wird, wobei in den Einschmelzvergaser über Öffnungen Kohle eingebracht und über radial angeordnete Düsen das sauerstoffhaltige Gas eingeblasen wird. So entsteht ein Kohlefließbett, in dem auch größere Eisenschwammpartikel merklich abgebremst und bis zum Eintritt in eine Hochtemperaturzone im unteren Abschnitt des Kohlefließbettes um einen wesentlichen Betrag in ihrer Temperatur erhöht und schließlich aufgeschmolzen werden können. Das bekannte Verfahren sagt ansonsten nichts aus über die Qualität der einzusetzenden Kohle als Energieträger. Dennoch könnte in Abwandlung und Weiterentwicklung davon ausgegangen werden, daß dann, wenn Kohle als Energieträger eingesetzt wird, sich dieses Verfahren dazu eignet, kohlenstoffhaltige Industrieabfallprodukte, wie Kunststoffe, in begrenzten Mengen zu verwenden bzw. einen Teil der Kohle durch solche Abfallprodukte zu ersetzen. Hier ergeben sich jedoch Schwierigkeiten. Beispielsweise ist ein zumischbarer Petrolkoksanteil durch seinen hohen Schwefelgehalt und eine Kunststoffzumischung durch einen zu hohen Anteil an flüchtigen Komponenten begrenzt. Bei Temperaturen von über 1000°C im Einschmelzvergaser werden die brennbaren Komponenten von organischen Kunststoffen fast zu 100 % pyrolytisch zu CO und H₂ zersetzt, d.h. es entsteht fast ausschließlich Reduktionsgas und kein Koks bzw. keine entgasten kohlenstoffhaltigen Produkte (char). Da zum Einschmelzen des Eisenschwammes ein Festbett aus entgaster Kohle (char), hier auch als Koks bezeichnet, zwingend erforderlich ist, muß dieses Bett durch derartige kohlenstoffhaltige Zugaben, d.h. Petrolkoks, Koks oder entgaste Kohle, gebildet werden. Der hohe Schwefelgehalt des Petrolkokses erfordert andererseits die Zugabe großer Mengen an Kalkstein und/oder Dolomit, so daß hierdurch seine Zugabemenge äußerst begrenzt ist, da diese Zuschläge wiederum zu Temperaturproblemen im Reduktionsaggregat und zu großen Schlackenmengen führen.

GB-A-2 185 970 offenbart die Zufuhr eines Gemisches aus Petrolkoks und kohlenstoffhaltigen Abfallen, z.B. Klarschlamm, zu einem Einschmelzvergaser, in welchem Roheisen und ein Reduktionsgas hergestellt werden, welches für die Direktreduktion von Eisenerz zu (im Einschmelzvergaser zu verarbeitenden) Einsenschwamm verwendet wird.

Hier setzt die vorliegende Erfindung ein, deren Aufgabe es ist, ausgehend von vorstehenden, dem bekannten Stand der Technik bereits weiterentwickelnden Überlegungen ein gattungsgemäßes Verfahren zu schaffen, das die Überwindung der bekannten Schwierigkeiten beim Einsatz von Kunststoffen einerseits und jener von Petrolkoks andererseits schafft, so daß bestehende Abfall-Entsorgungsprobleme für die genannten Komponenten optimal in Kombination mit verbilligten Betriebsbedingungen bei der Roheisenherstellung verbunden werden können.

Die Aufgabe wird gelöst mit einem Verfahren mit den Merkmalen von Anspruch 1. Bevorzugte Merkmale finden sich in den abhängigen Ansprüchen.

Bei der erfindungsgemäßen Mischzugabe von Petrolkoks und organischen Kunststoffen heben sich die erwahnten Nachteile z.T. auf, so daß ein viel größerer Teil der Kohle durch die kostengünstigen Abfall-Energieträger ersetzt werden kann, als das bei Zugabe der Einzelkomponenten Kunststoff bzw. Petrolkoks allein der Fall sein kann. Die Kunststoffe beinhalten keinen Schwefel und ganz wenig Asche, während der Petrolkoks hohe Schwefelanteile, jedoch relativ wenig flüchtige Bestandteile enthält. Abhängig vom Schwefelgehalt des Petrolkokses wird erfindungsgemäß das Verhältnis dieser zwei Komponenten zueinander so angepaßt, daß die Eigenschaften der Kunststoff/Petrolkoksmischung in bezug auf flüchtige Bestandteile einer hochflüchtigen Kohle ähnlich werden.
Gleichzeitig wird die Mischung so eingestellt, daß die entstehenden Reduktionsgase primär wenigstens teilweise durch Cracken aus dem Kunststoff und durch partielle Oxidation aus dem Koks auf eine Weise gewonnen werden können, daß der Kunststoff als CO- und H₂-Erzeuger und die entgaste Kohle als CO-Erzeuger wirken.

Durch seinen hohen Feststoffgehalt und einen niedrigen Gehalt an flüchtigen Bestandteilen trägt der Petrolkoks überproportional zur Aufrechterhaltung des Koksbettes im Einschmelzvergaser bei. Der Petrolkoks als Koksbettbestandteil und der Kunststoff als CO- und H₂-Lieferant ergänzen sich dadurch sehr gut und erhöhen gegenseitig ihren möglichen, d.h. technisch vertretbaren Anteil in der Kohlemischung.

Bei einem etwas niedrigeren Schwefelgehalt des Petrolkokses könnten 50 bis 60 % der Kohle durch die genannte Mischung, d.h. ein spezielles Abfall-Zweikomponentensystem ersetzt werden, wodurch sich die Produktionskosten des Roheisens bei dem hier interessierenden Verfahren der Direktreduktion bedeutend herabsetzen lassen.

Der Einsatz von Kohlen mit einem niedrigen Gehalt an flüchtigen Bestandteilen, mit einem niedrigen Schwefelgehalt und mit guter Kornerhaltung bei hohen Temperaturen führt zur weiteren Erhöhung des Kunststoff/Petrolkoks-Anteiles in der Mischung. Als Limitierungsfaktor für den Kunststoffanteil in der Kohlemischung ist das Reduktionsaggregat bzw. die im Einschmelzvergaser produzierte Gasmenge anzusehen.

Bei dem hier beschriebenen Verfahren dient das Reduktionsaggregat mit seinem heißen Zwischenprodukt, bestehend aus Eisenschwamm, gebranntem Dolomit und Kalk, gleichzeitig als Entschwefelungsaggregat. Da das Reduktionsaggregat nur bis zu einer bestimmten Grenze überblasen werden kann, wäre es erforderlich, bei sehr hohem Kunststoffanteil ein zusätzliches Entschwefelungsaggregat für das heiße staubige Überschußgas vorzusehen. Bei überproportional hohem Petrolkoksanteil mit einem hohen Schwefelgehalt sind sehr hohe Zuschlagstoffmengen erforderlich, die eine zu große Schlackenmenge und zu hohen Wärmebedarf für die Calcinierung der Zuschläge bzw. zu niedrige Temperaturen im Reduktionsaggregat zur Folge haben.

## Patentansprüche

1. Verfahren zur Erzeugung von flüssigem Roheisen aus stückigem Eisenerz, bei dem das Eisenerz als lose Schüttung in einem Direktreduktionsaggregat mittels heißer Reduktionsgase zu Eisenschwamm reduziert und dieser nachfolgend in einem Einschmelzvergaser mittels eingebrachtem Kohlenstoff und eingeblasenem sauerstoffhaltigen Gas unter Erzeugung von Reduktionsgas aufgeschmolzen wird, wobei wenigstens ein Teil des Reduktionsgases nach Abkühlung auf die für die Reduktion erforderliche Temperatur in die Reduktionszone des Direktreduktionsaggregates eingeleitet wird,
**dadurch gekennzeichnet,**
daß der Kohlenstoff dem Einschmelzvergaser in Form von Kohle und in erheblichem Ausmaß bis zu 60% in Form von Kunststoff und Petrolkoks zugeführt wird, wobei deren Verhältnis zueinander so angepaßt ist, daß die Eigenschaften ihrer Mischung in Bezug auf flüchtige Bestandteile einer hochflüchtigen Kohle ähnlich sind, und das Reduktionsgas primär durch Cracken aus dem Kunststoff und durch thermische Vergasung aus dem Petrolkoks gewonnen wird.

2. Verfahren nach Anspruch 1,
dadurch gekennzeichnet, daß für die Erzeugung der Reduktionsgaskomponenten der Kunststoff als CO- und H₂-Erzeuger und der Petrolkoks bzw. Koks als CO-Erzeuger die Regelgröße darstellt.

3. Verfahren nach den Ansprüchen 1 oder 2,
dadurch gekennzeichnet, daß der Anteil an Kunststoff und/oder Petrolkoks in Abhängigkeit von der Kohlequalität und dem Schwefelgehalt des Petrolkokses sowie der Kohle vorgewählt wird.

4. Verfahren nach einem der Ansprüche 1 bis 3,
dadurch gekennzeichnet, daß das Verhältnis Kunststoff/Petrolkoks dem Schwefelgehalt des Petrolkokses und dem Gehalt an flüchtigen Bestandteilen der Kohle angepaßt wird.

5. Verfahren nach einem der Ansprüche 1 bis 4,
dadurch gekennzeichnet, daß der Kunststoffanteil in der Mischung so gewählt wird, daß wenigstens eine erhebliche, im Einschmelzvergaser gewonnene Gasmenge über das Reduktionsaggregat geleitet werden kann.

6. Verfahren nach den Ansprüchen 1 und 4,
dadurch gekennzeichnet, daß der Petrolkoksanteil in der Kohlemischung abhängig vom Schwefelgehalt des Petrolkokses bzw. der erforderlichen Menge der Zuschläge, die den Schwefel binden, gewählt wird.

7. Verfahren nach Anspruch 1,
dadurch gekennzeichnet, daß in den oberen Teil des Vergasers eine ausreichende Menge an sauerstoff-, kohlendioxid- und wasserdampfhaltigen Gasen zugeführt wird, um die Russbildung beim Zersetzen von Kunststoff zu vermeiden.

## Claims

1. Process for producing molten pig iron from iron oxide pellets, in which the iron oxide is in a direct reduction unit reduced as loose bulk by means of hot reduction gases into iron sponge which is subsequently molten in a melt-down gasifier by means of fed carbon and blown in oxygen containing gas whilst producing a reduction gas, and at least a portion of the reduction gas is, after cooling down to reduction temperature, introduced into the reduction zone of the direct reduction unit, **characterised in that** the carbon is delivered to the melt-down gasifier in the form of coal and to a substantial extent up to 60% in the form of plastic and petrolic coke, and their ratio is matched in such a manner that the properties of their mixture relative to volatile components are similar to a high-volatile coal, and the reduction gas is primarily obtained by cracking from the plastic material and by thermal gasification from the petrolic coke.

2. Process according to Claim 1, **characterised in that** the plastic as CO- and H2 producer and the petrolic coke or coke as CO-producer represents the controlled condition for production of the reduction gas components.

3. Process according to Claims 1 or 2, **characterised in that** the proportion of plastic and/or petrolic coke is preselected in dependence of the coal quality and the sulfur content of the petrolic coke as well as the coal.

4. Process according to one of Claims 1 to 3, **characterised in that** the ratio plastic/petrolic coke is matched to the sulfur content of the petrolic coke and the content of volatile components of the coal.

5. Process according to one of Claims 1 to 4, **characterised in that** the proportion of plastic in the mixture is chosen in such a manner that at least a considerable volume of gas as obtained in the melt-down gasifier can be ducted via the reduction unit.

6. Process according to Claims 1 and 4, **characterised in that** the petrolic coke content in the coal mixture is chosen in dependence of the sulfur content of the petrolic coke or the required quantity of flux which bonds the sulfur.

7. Process according to Claim 1, **characterised in that** into the top part of the gasifier is delivered a sufficient volume of oxygen, carbondioxide and water-vapour containing gases so as to prevent soot from forming during decomposition of the plastic material.

## Revendications

1. Procédé pour produire de la fonte brute liquide à partir de minerai de fer en morceaux, selon lequel on réduit le minerai de fer sous la forme d'une masse en vrac libre, dans une unité de réduction directe à l'aide de gaz de réduction chauds pour former une éponge de fer et on fait fondre ensuite cette dernière dans un dispositif de gazéification à fusion au moyen de carbone introduit et à l'aide d'un gaz injecté par soufflage et contenant de l'oxygène, moyennant la production d'un gaz réducteur, au moins une partie du gaz réducteur étant introduite, après refroidissement à la température nécessaire pour la réduction, dans la zone de réduction de l'unité de réduction directe, caractérisé en ce que le carbone est envoyé au dispositif de gazéification à fusion sous la forme de charbon en un pourcentage important atteignant jusqu'à 60 % sous la forme de matière plastique et de coke de pétrole, le rapport de ces substances étant adaptés entre eux de telle sorte que les caractéristiques de leur mélange sont similaires à celles de constituants volatils d'un charbon très volatil et qu'on obtient le gaz réducteur principalement par craquage à partir de la matière plastique et par gazéification thermique à partir du coke de pétrole.

2. Procédé selon la revendication 1, caractérisé en ce que pour la production des constituants du gaz réducteur, la matière plastique en tant que générateur de CO et de H et le coke de pétrole ou le coke en tant que générateur de CO représentent la grandeur de régulation.

3. Procédé selon les revendications 1 ou 2, caractérisé en ce que le pourcentage de matière plastique et/ou de coke de pétrole est présélectionné en fonction de la qualité du charbon et de la teneur en soufre du coke de pétrole ainsi que du charbon.

4. Procédé selon l'une des revendications 1 à 3, caractérisé en ce que le rapport matière plastique/coke de pétrole est adapté à la teneur en soufre du coke de pétrole et au contenu en constituants volatils du charbon.

5. Procédé selon l'une des revendications 1 à 4, caractérisé en ce que le pourcentage de matière plastique dans le mélange est choisi de telle sorte qu'au moins une quantité de gaz élevée obtenue dans le dispositif de dégazage à fusion peut être dirigée au-dessus de l'unité de réduction.

6. Procédé selon les revendications 1 et 4, caractérisé en ce que le pourcentage de coke de pétrole dans le mélange de carbone est choisi en fonction de la teneur en soufre du coke de pétrole ou de la quantité nécessaire des additifs, qui fixent le soufre.

7. Procédé selon la revendication 1, caractérisé en ce qu'une quantité suffisante de gaz contenant de l'oxygène, du gaz carbonique et de la vapeur d'eau, est envoyée dans la partie supérieure du dispositif de gazéification afin d'éviter la formation de suie lors de la décomposition de la matière plastique.
